## Europäisches Patentamt

## European Patent Office

## Office européen des brevets

(11) Numéro de publication: **0 131 722**
**B1**

## FASCICULE DE BREVET EUROPÉEN

(45) Date de publication du fascicule du brevet:
22.07.87

(21) Numéro de dépôt: **84106108.8**

(22) Date de dépôt: **29.05.84**

(51) Int. Cl.⁴: **G 02 B 6/24, H 04 Q 3/52**

(54) **Dispositif opto-électronique de commutation spatiale.**

(30) Priorité: **31.05.83 FR 8308971**

(43) Date de publication de la demande:
**23.01.85 Bulletin 85/4**

(45) Mention de la délivrance du brevet:
**22.07.87 Bulletin 87/30**

(84) Etats contractants désignés:
**BE DE FR GB IT LU NL SE**

(56) Documents cité:
**FR-A-2 520 179**
**GB-A-1 407 544**
**US-A-3 542 451**
**US-A-3 792 239**

**IEEE JOURNAL OF QUANTUM ELECTRONICS, vol. QE-17, no. 8, août 1981, pages 1539-1546, IEEE, New York, US; E.H. HARA et al.: "A high speed optoelectronic matrix switch using heterojunction switching photodiodes"**
**NATIONAL TELECOMMUNICATIONS CONFERENCE, 29 novembre - 3 décembre 1981, New Orleans, LA., vol. 2, pages C1.2.1-C1.2.4, IEEE, New York, US; E.H. HARA et al.: "Applications of the optoelectronic matrix switch to communication systems"**

(73) Titulaire: **ALCATEL CIT, 33, rue Emeriau, F-75015 Paris (FR)**

(72) Inventeur: **Boirat, Robert, La Bruyère Roinville, F-91410 Dourdan (FR)**
Inventeur: **Faugeras, Philippe, 11, rue de Sully, F-92100 Boulogne- Billancourt (FR)**
Inventeur: **Haux, Denis, 10, rue de Cochereau, F-91150 Etampes (FR)**
Inventeur: **Mimeur, Jacques, Chemin des Barattes, F-74290 Veyrier du Lac (FR)**

(74) Mandataire: **Weinmiller, Jürgen, Lennéstrasse 9 Postfach 24, D-8133 Feldafing (DE)**

## Description

La présente invention est du domaine des transmissions optiques. Elle porte plus particulièrement sur un dispositif opto-électronique de commutation spatiale entre accès de N premiers éléments distincts et accès de P second éléments optiques distincts. Un tel dispositif est utilisé pour diriger la lumière depuis les accès des seconds éléments optiques vers les accès des premiers éléments; il s'applique tout particulièrement à la diffusion de P programmes depuis les accès des P seconds éléments optiques vers chacun des accès des premiers éléments qui, par des couplages sélectifs appropriés, recevront chacun celui des programmes souhaité, et constitue alors un diffuseur optique de programme.

D'une manière générale, dans un diffuseur optique de P programmes vers N abonnés, N fibres optiques sont affectées à la transmission optique de chacun des programmes pour les N abonnés. Les P fois N fibres résultantes sont regroupées en N groupes de P fibres, chacun affecté à l'un des abonnés, tandis que l'une convenable des P fibres de chacun des N groupes est couplée à la fibre d'abonné concernée pour la réception par cet abonné du programme souhaité parmi les P programmes mis à sa disposition.

L'article intitulé "A high speed optoelectric matrix switch using heterojunction switching photodiodes" de E.H. Hara et autres, publié dans IEEE journal of quantum electronics, vol QE 17, n° 8, août 1981, donne le principe de réalisation d'un tel dispositif opto-électronique de commutation.

Selon cet article la distribution des signaux est effectuée depuis les accès des seconds éléments par des fibres optiques tandis que la sélection des signaux appliqués individuellement aux accès des premiers éléments est assurée par des photodiodes discrètes.

La présente invention a pour but de réaliser un dispositif opto-électronique de commutation, se présentant sous une forme modulaire et dans lequel les photodiodes utilisées se présentent sous forme de barrettes intégrées simplement associées et assemblées aux autres éléments modulaires.

La présente invention a donc pour objet un dispositif opto-électronique de commutation spatiale entre accès de N premiers éléments distincts et accès de P seconds éléments distincts, utilisant pour la transmission de signaux, depuis les P seconds éléments vers les N premiers éléments, des guides d'onde optiques et pour les sélections de couplage entre les accès des P seconds éléments et les accès des N premiers éléments des photodiodes, caractérisé en ce qu'il comporte:

- un ensemble distributeur à P plaquettes dites plaquettes de distribution, dans lequel chacune des plaquettes de distribution incorpore N guides d'onde individuels ayant d'une part des premières extrémités couplées en commun à l'accès du second élément auquel la plaquette de distribution considérée est affectée et d'autre part leurs secondes extrémités, dites accès de sortie, alignées sur un bord de la plaquette de distribution, sur lequel elles sont disposées à un premier pas (t), et dans lequel tous les accès de sortie des guides des différentes plaquettes de distribution sont d'un même côté en étant agencés en N rangées chacune ayant P accès de sortie disposés à un second pas (r),

- un ensemble concentrateur-sélecteur à N plaquettes dites plaquettes de concentration et de sélection, dans lequel chacune des N plaquettes de concentration et de sélection, d'une part, porte sur un premier bord une barrette intégrée de P photodiodes dont les sorties électriques individuelles sont couplées en commun à l'accès du premier élément qui est affecté à cette plaquette de concentration et de sélection et, d'autre part, incorpore P guides d'onde s'épanouissant depuis ledit premier bord de la plaquette de concentration et de sélection où ils ont des premières extrémités distinctes mais rassemblées au pas desdites photodiodes et couplées à ces photodiodes jusqu'au bord opposé où ils ont des secondes extrémités distinctes alignées et disposées audit second pas (r) des accès de sortie de chacune desdites N rangées de l'ensemble distributeur, et dans lequel toutes les secondes extrémités des guides des plaquettes de concentration et de sélection sont disposées d'un même côté, et en ce que ledit ensemble distributeur et ledit ensemble concentrateur-sélecteur sont assemblés en ayant les plaquettes de concentration et de sélection disposées transversalement aux plaquettes de distribution et les accès de sortie des N rangées de l'ensemble distributeur de ces ensembles couplés aux secondes extrémités des guides des N plaquettes de concentration et de sélection respectivement.

L'invention sera décrite en se référant aux dessins ci-annexés dans lesquels on a illustré un exemple de réalisation du dispositif pour la diffusion d'une pluralité de programmes vers plusieurs abonnés. Dans ces dessins:

- la figure 1 représente schématiquement le dispositif opto-électroniqu de commutation spatiale selon l'invention;

- la figure 2 représente un mode de réalistion concrète du dispositif de commutation selon la figure 1,

- la figure 3 représente l'un des deux éléments modulaires rentrant dans le dispositif selon la figure 2,

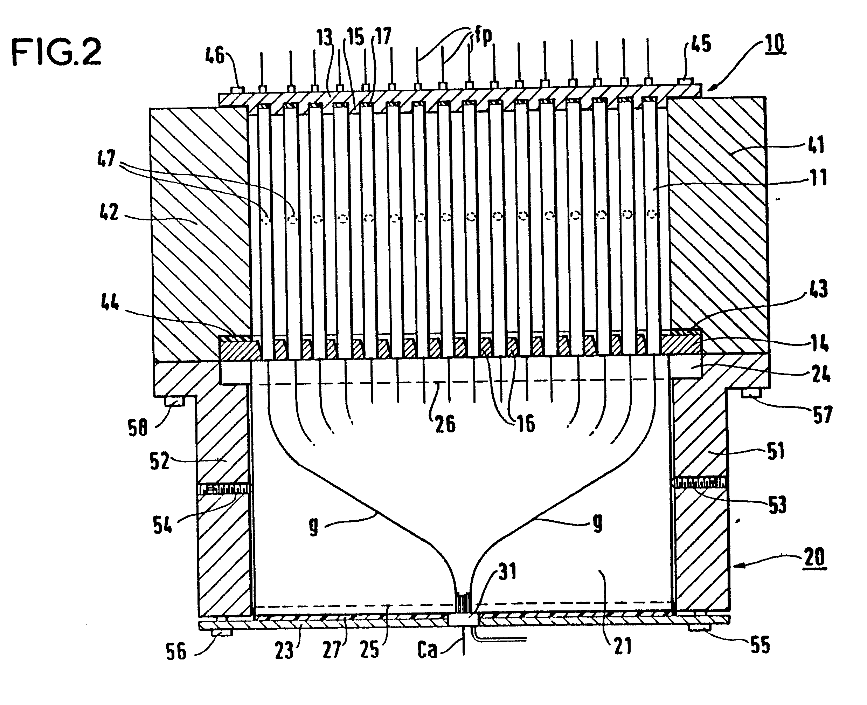

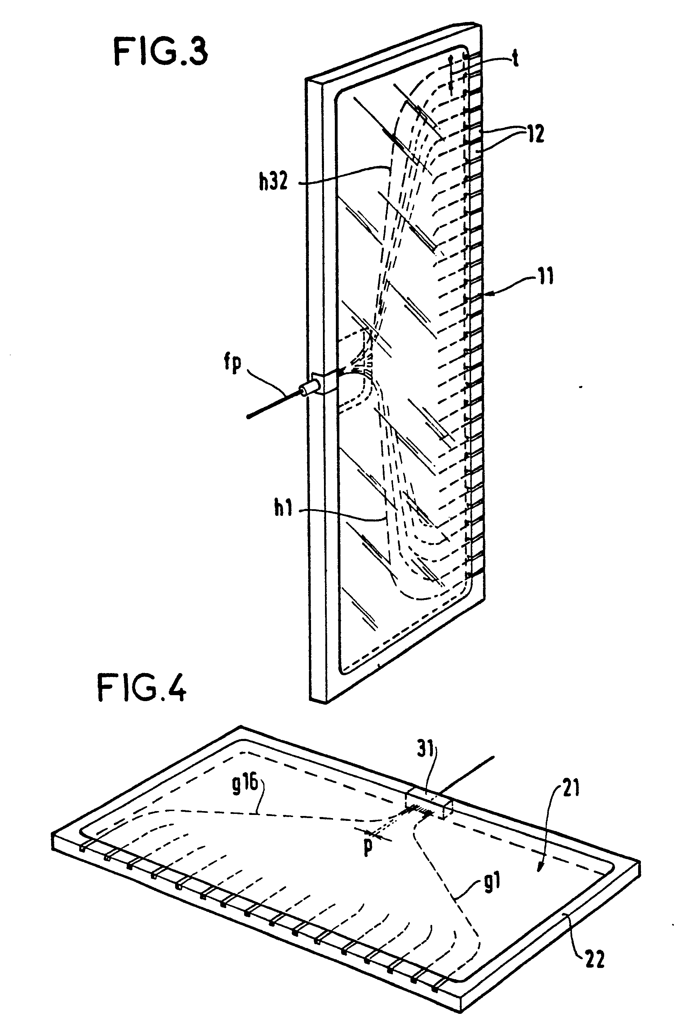

- ia figure 4 représente l'autre élément modulaire rentrant dans le dispositif selon la figure 2,

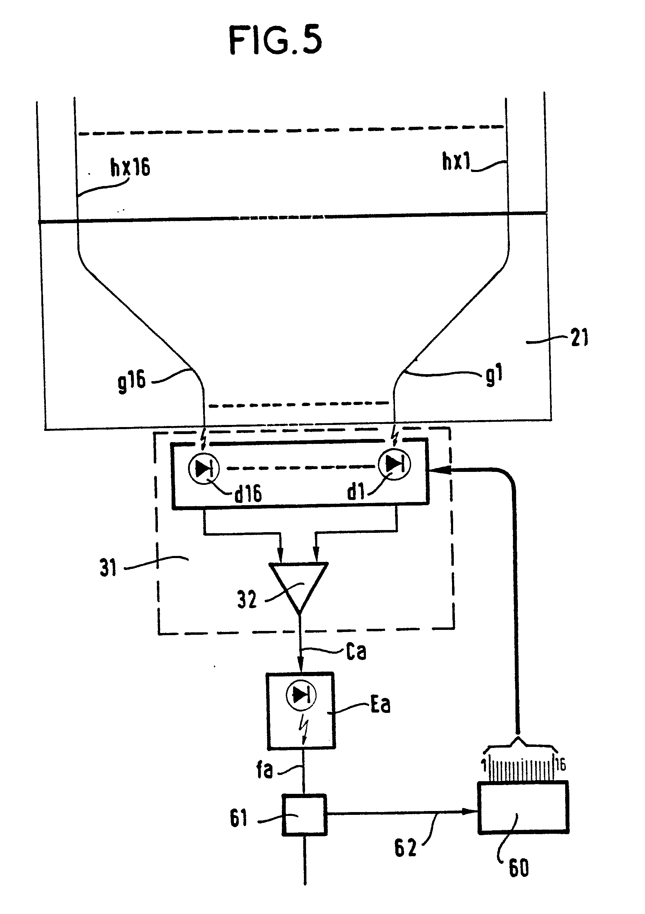

- la figure 5 est un schéma représentant ce deuxième élément modulaire selon la figure 4, son couplage avec une fibre d'abonné et la commande sélective d'alimentation de l'une des photodiodes qu'il comporte.

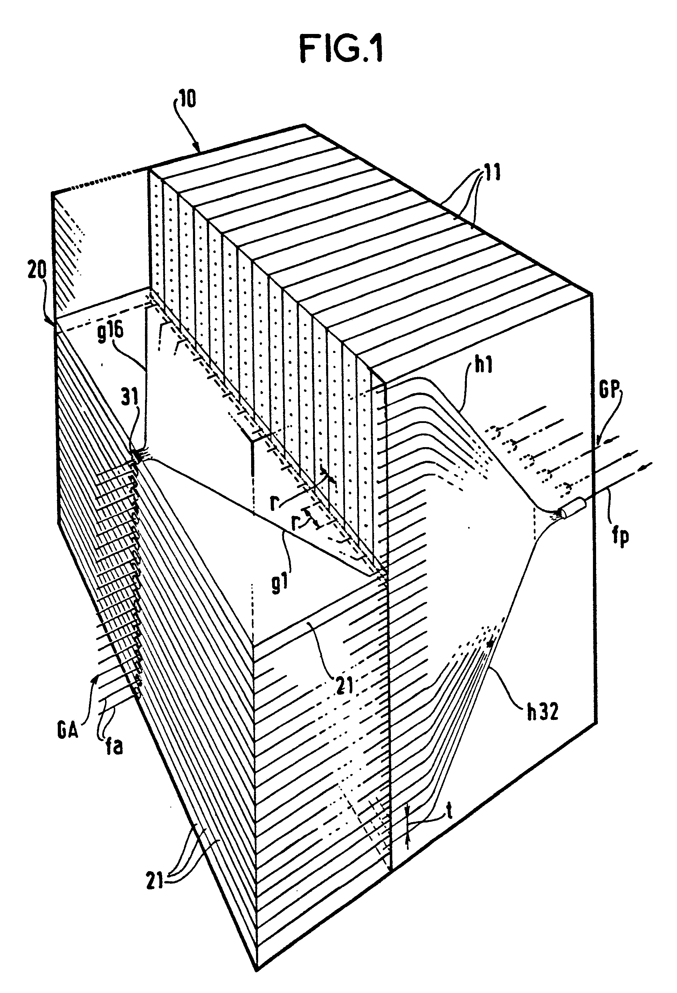

Dans la figure 1, on a illustré schématiquement le dispositif opto-électronique de commutation spatiale selon l'invention, appliqué à la diffusion de P programmes depuis un groupe GP de P fibres optiques distinctes, dites fibres de programme fp, vers N abonnés auxquels est affecté un groupe GA de N fibres optiques distinctes, dites fibres d'abonnés fa. La description du dispositif est faite en choisissant un nombre de 16 programmes à diffuser vers 32 abonnés, P = 16, N = 32. Ce dispositif est appelé diffuseur opto-électronique.

Le dispositif comporte un ensemble distributeur 10 couplé aux accès des 16 fibres de programme fp et un ensemble concentrateur géométrique sélecteur 20, désigné par la suite de façon plus concise par concentrateur-sélecteur, couplé à l'ensemble distributeur 10 et aux accès des 32 fibres d'abonnés fa.

L'ensemble distributeur 10 est constitué par un empilement de 16 plaquettes de distribution optique de programme, 11, chacune affectée à l'une des fibres de programme fp. Ces plaquettes de distribution 11 sont identiques les unes aux autres. Chacune de ces plaquettes est rigide et plate et incorpore 32 guides d'onde individuels h1 à h32 et présente, sur un de ses bords, un accès de couplage commun de ces 32 guides d'onde avec l'accès de la fibre de programme fp qui lui est affectée, et sur le bord opposé, 32 accès distincts dits de sortie ou de distribution de ce programme disposés à pas régulier t. Dans l'ensemble distributeur 10 les accès de distribution sur les différentes plaquettes sont d'un même côté et définissent entre eux 32 rangées chacune de 16 accès de distribution des 16 programmes, disposés au pas r sur leur rangée.

L'ensemble concentrateur-sélecteur 20 est constitué par un autre empilement de 32 plaquettes de concentration et de sélection 21, chacune affectée à l'une des fibres d'abonné fa. Ces plaquettes de concentration et de sélection 21 sont identiques entre elles. Chacune d'elles est rigide et plate et incorpore 16 guides d'onde individuels g1 à g16 et comporte une barrette intrégrée de 16 photodiodes, 31.

Les 16 guides d'ondes g1 à g16 de chacune des plaquettes de concentration et de sélection 21 s'étendent en une nappe s'épanouissant depuis l'un des bords de la plaquette considérée, sur lequel ils ont des premières extrémités distinctes rassemblées en ligne sur une partie extrêmement faible de ce bord, en ayant entre elles un espacement très faible, non indiqué dans la figure 1, de l'ordre de 100 μm, jusqu'à un second bord opposé de cette plaquette, sur lequel ils ont des secondes extrémités distinctes alignées entre elles au pas régulier r des accès de distribution des différents programmes sur les rangées qu'ils définissent.

Les 16 photodiodes, non illustrées dans cette figure 1, compte tenu de leur très faible pas de l'ordre de 100 μm et du faible encombrement global résultant, sont reliées avec la première extrémité des 16 guides d'onde de cette plaquette 21, respectivement. La barrette intégrée 31 est solidarisée, par collage, au premier bord de la plaquette en ayant ses photodiodes individuelles reliées aux premières extrémités des guides d'onde g, respectivement.

Dans l'ensemble concentrateur-sélecteur 20, les barrettes de photodiodes 31 des différentes plaquettes de concentration et de sélection 21 sont d'un même côté, tandis que les secondes extrémités de leurs guides g sont sur un même autre côté opposé.

L'ensemble concentrateur-sélecteur 20 et l'ensemble distributeur 10 sont assemblés en ayant les 32 plaquettes de concentration et de selection 21 et les 16 plaquettes de distribution 11 disposées orthogonalement, avec les accès de distribution de chacune des rangées en regard des secondes extrémités des guides d'onde g de chacune des plaquettes 21.

Chacune des barrettes intégrées de photodiodes 31 a une sortie électrique commune pour les photodiodes de cette barrette. Cette sortie commune est couplée à la fibre d'abonné fa affectée à cette plaquette de concentration et de sélection 21, par une diode électroluminescente, non schématisee.

En variante, les premiers éléments affectés aux abonnés ne seront plus des fibres optiques mais des conducteus électriques. Dans ce cas, les barrettes de photodiodes auront chacune leur sortie commune reliée au conducteur d'abonné correspondant.

En variante également, les P seconds éléments couplés respectivement aux guides des P plaquettes de distribution et constituées dans l'exemple illustré par les fibres de programmes fp pourront être des sources de lumière émettrices de programme, chaque source étant par exemple constituée d'une diode-laser ou, plus avantageusement, de plusieurs diodes laser émettant le même programme, cette dernière configuration présentant notamment l'avantage, outre celui d'une plus grande fiabilité, de diminuer le bruit modal grâce à la superposition des différents modes des lasers.

Bien que non illustré dans cette figure 1, on comprendra que les différentes photodiodes de chaque barrette seront individuellement commandées, à partir de l'abonné à qui elle correspond, pour qu'une seule d'entre elles assure la transmission du programme transmis par le seul des guides g auquel elle est couplée. D'une barrette à l'autre ces commandes sont définies à partir des différents abonnés. Il s'ensuit que les abonnés peuvent recevoir celui des programmes souhaité parmi ceux transmis, plusieurs abonnés pouvant recevoir un même programme.

Dans la figure 2, on a représenté un mode de réalisation concrète du diffuseur opto-électronique, correspondant à celui de la figure 1. On y a repéré les éléments identiques par les références précédentes.

L'empilement des 16 plaquettes de distribution de programme 11, formant l'ensemble distributeur 10, est effectué entre deux plaques ou grilles de positionnement 13 et 14. Ces grilles ont chacune des nervures, 15 pour la grille 13 et 16 pour la grille 14, en regard les unes des autres d'une grille à l'autre et entre lesquelles viennent se loger les bords des plaquettes de distribution 11 sur lesquels s'étendent les accès de leurs guides.

Les nervures 15 entre lesquelles sont reçus les bords qui portent les accès de couplage commun des guides des différentes plaquettes, à coupler avec les différentes fibres de programme fp, sont de section rectangulaire. Une fenêtre au fond de chacune des rainures qu'ils définissent entre eux permet le couplage de leurs guides avec chacune des fibres fp. Cette grille porte des languettes élastiques 17 qui tapissent le fond des rainures délimitées par les nervures 15, pour un positionnement sans jeu des plaquettes 11 sur cette grille et dans l'ensemble distributeur 10 résultant.

Les nervures 16 entre lesquelles sont reçus les bords qui portent les accès de sortie de programme, définis par les guides de chaque plaquette 11, ont un bord biseauté, pour permettre un positionnement ferme et précis de ce bord et donc de l'ensemble pour les différentes plaquettes 11. Les rainures délimitées entre ces nervures 16 sont ouvertes de part en part de la grille 14, de sorte que le bord de chaque plaquette 11 soit situé dans le plan de la face plane de la grille 14.

Deux flasques 41, 42, pouvant appartenir à un cadre entourant l'empilement constitué, assurent l'assemblage des deux grilles 13 et 14, les bords de grille 14 venant se loger dans un décrochement prévu sur la face interne de chaque flasque dont le fond porte un palier 43 ou 44, de caoutchouc. Les grilles sont fixées aux flasques par des vis telles que 45, 46.

L'empilement des 32 plaquettes de concentration et de sélection 21 est constitué, de manière analogue, sur deux grilles 23 et 24 semblables aux grilles précitées 13 et 14. La grille 23 porte des nervures 25, de section rectangulaire, dont les rainures qu'elles délimitent sont tapissées de languettes élastiques 27. Ces rainures reçoivent les bords des plaquettes 21 sur lesquels sont rapportées les barrettes de photodiodes 31. La grille 24 porte des nervures 26 ayant un bord biseauté, dont les rainures qu'elles délimitent reçoivent les bords des plaquettes portant les secondes extrémités de leurs guides g.

Deux flasques 51, 52, pouvant appartenir à un cadre entourant l'empilement constitué, assurent l'assemblage de ces deux grilles 23 et 24. Chacun des bords opposés de la grille 24, transversaux aux plaquettes 21, est logé dans un décrochement prévu sur la face interne de chacun des flasques 51, 52. Des vis telles que 55, 56 assurent le maintien des grilles sur ces flasques 51, 52. La barrette 31 de photodiodes couplées aux guides g, sur chacune des plaquettes 21, vient se loger dans l'épaisseur de la grille 23, présentant une fenêtre convenable à cet effet. Les sorties électriques Ca des différentes barrettes émergent de l'ensemble concentrateur-sélecteur 20.

Dans chacun des ensembles constitués, des paires de vis de réglage, telles que 47 pour l'ensemble distributeur 10 et 53, 54 pour l'ensemble concentrateur-sélecteur 20, sont montées pour agir sur les bords des plaquettes individuelles exemptes d'extrémités ou accès des guides qu'elles comportent.

Ces deux ensembles 10 et 20 sont assemblés pour constituer le dispositif opto-électronique final au moyen de vis telles que 57, 58 engagées dans leurs flasques 41, 51 et 42, 52.

Dans la figure 3 on a illustré un exemple de réalisation de l'une des plaquettes 11 de distribution de programme, rentrant dans les réalisations données dans les figures 1 et 2. Cette plaquette 11 incorpore les 32 guides individuels h1 à h32 illustrés dans la figure 1. Ces 32 guides ont des premières extrémités rassemblées sur un bord pour constituer l'accès de couplage commun des 32 guides h avec la fibre de programme fp à laquelle est affectée la plaquette 11. Les 32 guides s'épanouissent depuis ce bord où ils ont leur accès de couplage commun avec la fibre fp jusqu'au bord opposé où ils ont leurs autres extrémités distinctes, qui forment les accès de sortie multiple de ce même programme, disposées au pas t entre elles. Cette plaquette 11 comporte, en outre une armature périphérique 12, par exemple en alliage à base d'aluminium, pour son montage mécanique dans l'ensemble distributeur précité.

Cette plaquette de distribution pourra être réalisée, en structure intégrée, en créant les guides d'onde h par diffusion d'ions dans une plaque de verre. Ce mode d'obtention est décrit, par exemple, dans l'article intitulé "Planar multimode devices for fiber optics" de G.L. Tangonan et autres présenté à Optical Communication Conference, Amsterdam 17-19, Septembre 1979 ou dans l'article intitulé "Fast fabrication method for thick and highly multimode Optical Waveguides" de G.H. Chartier et autres, publié dans ELECTRONICS LETTERS Vol. 13 N° 25 du 8 Décembre 1977.

Cette plaquette 11 peut également être obtenue par surmoulage de fibres individuelles constituant lesdits guides d'onde h dans une résine époxy chargée en silicé ou par moulage de ces fibres dans du verre à point de fusion de l'ordre de 500° et à faible coefficient de dilatation minimisant les contraintes lors du refroidissement. Dans ces derniers modes d'obtention, une fibre supplémentaire dite fibre commune, de section plus grande que celle des guides individuels, doit être adjointe aux 32 fibres individuelles h pour d'une part être couplée directement aux extrémités correspondantes des guides h rassemblées en un réseau hexagonal et d'autre part constituer l'accès de couplage commun pour ces 32 guides h avec la fibre fp. Les extrémités distinctes des guides h et l'extrémité de la fibre supplémentaire commune seront initialement prépositionnées et collées sur l'armature 12 jouant le rôle de cadre de positionnement initial; après moulage ou surmoulage les bords de ce cadre initial seront rectifiés et polis.

Dans la figure 4, on a illustré un exemple de réalisation de l'une des plaquettes 21 de concentration et de sélection, rentrant dans les réalisations données dans les figures 1 et 2. Cette plaquette 21 incorpore les 16 guides d'onde individuels g1 à g16 et porte la barrette intégrée de photodiodes 31 rapportée sur son bord convenable. Dans la plaquette les guides g1 à g16 s'étendent depuis l'un de ses bords où ils ont leurs extrémités largement espacées au pas r jusqu'au bord opposé où ils ont leurs autres extrémités rassemblées en étant toutefois distinctes et au faible pas p entre elles égal au pas existant entre les photodiodes de la barrette intégrée 31. La barrette de photodiodes 31, dans laquelle les photodiodes sont au pas p, est collée sur le bord de la plaquette 21 en regard de ces extrémités des guides g.

La plaquette 21 comporte également en outre une armature périphérique 22, pour son montage mécanique dans l'ensemble concentrateur-sélecteur précité.

Cette plaquette de concentration et de sélection 21 pourra être obtenue, de manière analogue à la plaquette de distribution, en structure intégrée ou en partant de fibres individuelles, qui constituent les guides, noyées par moulage ou surmoulage. Dans ce dernier cas, où les guides sont des fibres individuelles, l'armature 22 jouera le rôle de cadre de prépositionnement des fibres individuelles et aura ses bords portant les extrémités des fibres rectifiés et polis. La barrette de photodiode 31 sera ensuite convenablement rapportée sur l'armature et y sera collée.

Dans la figure 5 on a illustré le schéma opto-électronique défini à partir de l'une de ces plaquettes de concentration et de sélection 21. On y a indiqué par hx1 à hx16 les guides de même rang x des plaquettes de distribution dont les accès de sortie pour les 16 différents programmes sont agencés en une rangée affectée à la plaquette de concentration et de sélection 21 illustrée. On y a indiqué aussi sous la référence 21 la plaquette de concentration proprement dite avec ses 16 guides d'onde g1 à g16, d'une part couplés aux accès des guides hx1 à hx16, respectivement, et d'autre part couplés aux photodiodes d1 à d16 de la barrette intégrée 31 qu'elle porte. Dans cette barrette 31, les photodiodes ont leurs sorties reliées à un amplificateur 32 qui définit la sortie unique Ca de la barrette 31. Une diode électroluminescente Ea assure le couplage entre la sortie Ca et la fibre d'abonné fa.

Ces photodiodes d1 à d16 ont leurs alimentations individuelles issues d'un circuit 60, tandis qu'un coupleur optique 61 inséré sur la fibre d'abonné fa assure la commande sélective d'alimentation de l'une des photodiodes de la barrette, pour la sélection par cet abonné de l'un des programmes transmis par les guides individuels g. Ce coupleur optique 61, de type en tant que tel connu, assure la continuité de la transmission sur la fibre fa du programme sélectionné mais permet également la sélection de ce programme depuis la fibre d'abonné. Il comportera, par exemple, un miroir semi-transparent interposé entre une lentille de focalisation et une lentille de collimation. Cette commande de sélection, depuis l'abonné, est transmise par le coupleur 61 sur une liaison 62 de commande du circuit d'alimentation des photodiodes, après détection non illustrée, la commande reçue ne permet l'alimentation que de la seule des photodiodes concernée.

La présente invention a été décrite en regard des exemples de réalisation illustrés dans le dessin ci-annexé. Il est évident que l'on peut, sans sortir du cadre de l'invention y apporter des modifications de détail et/ou remplacer certains moyens par d'autres moyens équivalents.

**Revendications**

1. Dispositif opto-électronique de commutation spatiale entre accès de premiers éléments distincts (fa) et accès de P seconds éléments distincts (fp), utilisant pour la transmission de signaux depuis les P seconds éléments vers les N premiers éléments des guides d'onde optiques et pour les sélections de couplage entre les accès des P seconds éléments et les accès des N premiers éléments des photodiodes, caractérisé en ce qu'il comporte:

- un ensemble distributeur (10) à P plaquettes (11) dites plaquettes de distribution, dans lequel chacune des plaquettes de distribution (11) incorpore N guides d'onde individuels (h) ayant d'une part des premières extrémités couplées en commun à l'accès du second élément (fp) auquel la plaquette de distribution considérée est affectée et d'autre part leurs secondes extrémités, dites accès de sortie, alignées sur un bord de la plaquette de distribution, sur lequel elles sont disposées à un premier pas (t), et dans lequel tous les accès de sortie des guides (h) des différentes plaquettes de distribution sont d'un même côté en étant agencés en N rangées chacune ayant P accès de sortie disposés à un second pas (r),

- un ensemble concentrateur-sélecteur (20) à N plaquettes (21) dites plaquettes de concentration et de sélection, dans lequel chacune des N plaquettes de concentration et de sélection (21), d'une part, porte sur un premier bord une barrette intégrée (31) de P photodiodes dont les sorties électriques individuelles sont couplées en commun à l'accès du premier éléments (fa) qui est affecté à cette plaquette de concentration et de sélection (21) et, d'autre part, incorpore P guides d'onde s'épanouissant depuis ledit premier bord de la plaquette de concentration et de sélection où ils ont des premières extrémités distinctes mais rassemblées au pas desdites photodiodes et couplées à ces photodiodes jusqu'au bord opposé où ils ont des secondes extrémités distinctes alignées et disposées audit second pas (r) des accès de sortie de chacune desdites N rangées de l'ensemble distributeur (10), et dans lequel toutes les secondes extrémités des guides (g) des plaquettes de concentration et de sélection (21) sont disposées d'un même côté,

et en ce que ledit ensemble distributeur (10) et ledit ensemble concentrateur-sélecteur (20) sont assemblés en ayant les plaquettes de concentration et de sélection (21) disposées transversalement aux plaquettes de distribution (11) et les accès de sortie de chacune des N rangées de l'ensemble distributeur couplés aux secondes extrémités des guides de chacune des plaquettes de concentration et de sélection (21).

2. Dispositif opto-électronique de commutation selon la revendication 1, caractérisé par le fait qu'il comporte:

- des premiers moyens mécaniques de maintien et de positionnement desdites plaquettes de distribution (11) en un empilement, pour constituer ledit ensemble distributeur (10), comportant deux premières grilles (13, 14) à nervures (15, 16) en regard d'une grille à l'autre et entre lesquelles sont montés les bords des plaquettes de distribution portant les extrémités de leurs guides (h), et deux flasques latéraux (41, 42) sur lesquels sont fixées ces premières grilles (13, 14)

- des seconds moyens mécaniques de maintien et de positionnement desdites plaquettes de concentration et de sélection (21) en un empilement, pour constituer ledit ensemble concentrateur-sélecteur (20), comportant deux secondes grilles (23, 24) à nervures (25, 26) en regard d'une de ces secondes grilles à l'autre et entre lesquelles sont montés les bords des plaquettes de concentration et de sélection portant les extrémités de leurs guides d'onde (g), et deux flasques latéraux (51, 52) sur lesquels sont fixées ces secondes grilles (23, 24), les barrettes de photodiodes (31) étant logées dans des fenêtres correspondantes de l'une (23) de ces secondes grilles (23, 24)

- et des moyens d'assemblage (57, 58) desdits ensembles en ayant les plaquettes (11) de l'un de ces ensembles (10) disposées transversalement aux plaquettes (21) de l'autre ensemble (20).

3. Dispositif opto-électronique de commutation selon l'une des revendications 1 et 2, caractérisé par le fait que chacune des plaquettes de distribution (11) comporte une armature périphérique (12), pour son montage mécanique dans ledit ensemble distributeur (10).

4. Dispositif opto-électronique de commutation selon l'une des revendications 1 à 3, caractérisé par le fait que chacune des plaquettes de concentration et de sélection (21) comporte une armature périphérique (22), pour son montage mécanique dans ledit ensemble concentrateur-sélecteur (20).

5. Dispositif opto-électronique de commutation selon l'une des revendications 1 à 4, caractérisé par le fait que chacune des plaquettes de distribution (11) est formée par une plaque de verre dans laquelle sont crées par diffusion d'ions les guides d'ondes (h) qu'elle incorpore.

6. Dispositif opto-électronique de commutation selon l'une des revendications 1 à 5, caractérisé par le fait que chacune des plaquettes de concentration et de sélection (21) est formée par une plaque de verre dans laquelle sont crées par diffusion d'ions les guides d'onde (g) qu'elle comporte et sur le premier bord de laquelle est rapportée la barrette intégrée (31) de photodiodes couplées individuellement aux premières extrémités de ses guides (g).

7. Dispositif opto-électronique de commutation selon l'une des revendications 1 à 4, caractérisé par le fait que chacune des plaquettes de distribution (11) est en une résine époxy chargée en silice dans laquelle sont noyées des fibres individuelles constituant ses propres guides d'onde (h).

8. Dispositif opto-électronique de commutation selon l'une des revendications 1 à 4, caractérisé par le fait que chacune des plaquettes de distribution (11) est en verre dans lequel sont noyées des fibres individuelles constituant ses propres guides d'onde (h).

9. Dispositif opto-électronique selon l'une des revendications 1 à 4, 7 et 8, caractérisé par le fait que chacune des plaquettes de concentration et de sélection (21) est en une résine époxy chargée en silice dans laquelle sont noyées des fibres individuelles constituant ses guides d'onde (g) et sur ledit premier bord de laquelle est rapportée par collage la barrette intégrée (31) de photodiodes couplées individuellement aux premières extrémités de ses guides, respectivement.

10. Dispositif opto-électronique selon l'une des revendications 1 à 4, et 8, caractérisé par le fait que chacune des plaquettes de concentration et de sélection (21) est en verre dans lequel sont noyées des fibres individuelles constituant ses guides d'onde (g) et sur ledit premier bord de laquelle est rapportée par collage la barrette intégrée (31) de photodiodes couplées individuellement aux premières extrémités de ses guides, respectivement.

**Patentansprüche**

1. Optoelektronische Vorrichtung zur räumlichen Durchschaltung zwischen Anschlüssen von N ersten getrennten Elementen (fa) und Anschlüssen von P zweiten getrennten Elementen (fp), unter Verwendung von Lichtleitern für die Signalübertragung von den P zweiten Elementen zu den N ersten Elementen und von Photodioden für die selektive Kopplung zwischen den Anschlüssen der P zweiten Elemente und den Anschlüssen der N ersten Elemente, dadurch gekennzeichnet, daß sie aufweist:
- eine Verteileinheit (10) aus P Platten (11), Verteilplatten genannt, die je N individuelle Lichtleiter (h) enthalten, deren erste Enden gemeinsam an den Anschluß desjenigen zweiten Elements (fp) gekoppelt ist, dem die betreffende Verteilplatte zugeordnet ist, während ihre zweiten Enden, Ausgangsanschlüsse genannt, auf einem Rand der Verteilplatte gemäß einem ersten Abstand (t) aufgereiht sind, wobei alle Ausgangsanschlüsse der Lichtleiter (h) der verschiedenen Verteilplatten auf einer Seite in N Reihen angeordnet sind und je P Ausgangsanschlüsse mit einem zweiten Abstand (r) besitzen,
- und eine Konzentrator-Auswahleinheit (20) mit N Platten (21), Konzentrations- und Auswahlplatten genannt, die je an einem Rand eine integrierte Leiste (31) von P Photodioden tragen, deren individuelle elektrische Ausgänge gemeinsamen an den Anschluß des ersten Elements (fa) gekoppelt sind, das dieser Konzentrations- und Auswahlplatte (21) zugeordnet ist, und die je P Lichtleiter umfassen, die sich von diesem ersten Rand der Konzentrations- und Auswahlplatte aus auffächern, wo sie getrennte, aber im Abstand der Photodioden angeordnete erste Enden besitzen und an die Photodioden gekoppelt sind, und die sich bis zum gegenüberliegenden Rand erstrecken, wo sie getrennte, gemäß dem zweiten Abstand (r) der Ausgangsanschlüsse jeder der N Reihen der Verteileinheit (10) aufgereihte zweite Enden besitzen, wobei alle zweiten Enden der Lichtleiter (g) der Konzentrations- und Auswahlplatten (21) sich auf derselben Seite befinden, und daß die Verteileinheit (10) und die Konzentrator-Auswahleinheit (20) so zusammengefügt sind, daß die Konzentrations- und Auswahlplatten (21) quer zu den Verteilplatten (11) angeordnet sind und daß die Ausgangsanschlüsse jeder der N Reihen der Verteileinheit an die zweiten Enden der Lichtleiter jeder der Konzentrations- und Auswahlplatten (21) gekoppelt sind.

2. Optoelektronische Schaltvorrichtung nach Anspruch 1, dadurch gekennzeichnet, daß sie aufweist:
- erste mechanische Mittel zum Halten und Positionieren der Verteilplatten (11) in Form eines Stapels, um die Verteileinheit (10) zu bilden, wobei diese Mittel zwei erste Gitter (13, 14) mit einander von Gitter zu Gitter gegenüberliegenden Rippen (15, 16), zwischen denen die die Enden ihrer Lichtleiter (h) tragenden Ränder der Verteilplatten gehalten werden, und zwei Seitenwangen (41, 42) aufweisen, auf denen diese ersten Gitter (13, 14) befestigt sind,
- zweite mechanische Mittel zum Halten und Positionieren der Konzentrations- und Auswahlplatten (21) in Form eines Stapels, um die Konzentrator-Auswahleinheit (20) zu bilden, wobei diese zweiten Mittel zwei zweite Gitter (23, 24) mit einander von Gitter zu Gitter gegenüberliegenden Rippen (25, 26), zwischen denen die die Enden ihrer Lichtleiter (g) tragenden Ränder der Konzentrations- und Auswahlplatten montiert sind, und zwei Seitenwangen (51, 52) aufweisen, auf denen diese zweiten Gitter (23, 24) befestigt sind, wobei die Photodiodenleisten (31) in entsprechenden Fenstern eines (23) dieser zweiten Gitter (23, 24) sitzen,
- und Mittel (57, 58) zum Zusammenfügen der Einheiten, wobei die Platten (11) der einen Einheit (10) quer zu den Platten (21) der anderen Einheit (20) angeordnet sind.

3. Optoelektronische Schaltvorrichtung nach einem der Ansprüche 1 und 2, dadurch gekennzeichnet, daß jede der Verteilplatten (11) eine periphere Armatur (12) für ihre mechanische Montage in der Verteileinheit (10) aufweist.

4. Optoelektronische Schaltvorrichtung nach einem der Ansprüche 1 bis 3, dadurch gekennzeichnet, daß jede der Konzentrations- und Auswahlplatten (21) eine periphere Armatur (22) für ihre mechanische Montage in der Konzentrator-Auswahleinheit (20) aufweist.

5. Optoelektronische Schaltvorrichtung nach einem der Ansprüche 1 bis 4, dadurch gekennzeichnet, daß jede der Verteilplatten (11) von einer Glasplatte gebildet wird, in der durch Ionendiffusion die Lichtleiter (h) gebildet werden.

6. Optoelektronische Schaltvorrichtung nach einem der Ansprüche 1 bis 5, dadurch gekennzeichnet, daß jede der Konzentrations- und Auswahlplatten (21) von einer Glasplatte gebildet wird, in der durch Ionendiffusion die Lichtleiter (g) erzeugt werden und an deren erstem Rand die integrierte Leiste der individuell an die jeweiligen ersten Enden dieser Lichtleiter (g) gekoppelten Photodioden angebracht ist.

7. Optoelektronische Schaltvorrichtung nach einem der Ansprüche 1 bis 4, dadurch gekennzeichnet, daß jede der Verteilplatten (11) aus einem mit Siliziumoxid versehenen Epoxyharz besteht, in das die individuellen, seine eigenen Lichtleiter (h) bildenden Fasern eingebettet sind.

8. Optoelektronische Schaltvorrichtung nach einem der Ansprüche 1 bis 4, dadurch gekennzeichnet, daß jede der Verteilplatten (11) aus einem Glas besteht, in das die individuellen, seine eigenen Lichtleiter (h) bildenden Fasern eingebettet sind.

9. Optoelektronische Vorrichtung nach einem der Ansprüche 1 bis 4, 7 und 8, dadurch gekennzeichnet, daß jede der Konzentrations- und Auswahlplatten (21) aus einem mit Siliziumoxid versehenen Epoxyharz besteht, in das individuelle Fasern eingebettet sind, welche seine Lichtleiter (g) bilden, und daß am ersten Rand jeder dieser Platten durch Kleben die integrierte Leiste (31) von individuell an die jeweiligen ersten Enden ihrer Lichtleiter gekoppelten Photodioden angebracht ist.

10. Optoelektronische Vorrichtung nach einem der Ansprüche 1 bis 4, 7 und 8, dadurch gekennzeichnet, daß jede der Konzentrations-und Auswahlplatten (21) aus Glas ist, in das individuelle Fasern, die ihre Lichtleiter (g) bilden, eingebettet sind, und daß am ersten Rand jeder dieser Platten durch Kleben die integrierte Leiste (31) von individuell an die jeweiligen ersten Enden ihrer Lichtleiter gekoppelten Photodioden angebracht ist.

## Claims

1. An optoelectronic spatial switch device for switching between accesses of N distinct first elements (fa) and accesses of P distinct second elements (fp), using optical waveguides for the transmission of signals from the P second elements towards the N first elements, and using photodiodes for the selective coupling between the accesses of the P second elements and the accesses of the N first elements, characterized in that it comprises:
- a first distributor assembly (10) having P plates (11) called distribution plates, each one of the distribution plates (11) incorporating N individual waveguides (h) having first ends coupled in common to the access of the second element (fp) to which the considered distribution plate is assigned, and having their second ends, called output accesses, aligned along the edge of the distribution plate on which they are disposed at a first pitch (t), wherein all the output accesses of the guides (h) of the different distribution plates are on the same side and are arranged in N rows each having P output accesses disposed according to a second pitch (r),
- a concentrator-selector assembly (20) having N plates (21) called concentration and selection plates, each one of these N concentration and selection plates (21) bearing on a first edge, an integrated strip (31) of P photodiodes, the individual electrical outputs of which are coupled in common to the access of the first element (fa), which is assigned to this concentration and selection plate (21), and in which each of the N concentration and selection plates further incorporates P waveguides that fan out from said first edge of the concentration and selection plate where they have first ends which are distinct but close together at the pitch of said photodiodes and where they are coupled to said photodiodes, these P waveguides extending to the opposite edge where they constitute aligned second distinct ends disposed at said second pitch (r) of the output accesses of each of said N rows of the distributor assembly (10), and wherein all the second ends of the waveguides (g) of the concentration and selection plate (21) are disposed on the same side, and that said distributor assembly (10) and said concentrator-selector assembly (20) are assembled to each other with the concentration and selection plates (21) being disposed transversely to the distribution plates (11) and output accesses of each of the N rows of the distributor assembly being coupled to the second ends of the waveguides of each of the concentration and selection plates (21).

2. An optoelectronic switch device according to claim 1, characterized in that it comprises:
- first mechanical means for holding and positioning said concentration and selection plates (11) in a stack in order to constitute the said distributor assembly (10), these means comprising two first grids (13, 14) having ribs on each grid facing the ribs on the other and between which the edges of the distribution plates bearing the ends of their waveguides (h) are mounted, and comprising two side blocks (41, 42) to which the first grids (13, 14) are attached,
- second mechanical means for holding and positioning said concentration and selection plates (21) in a stack in order to constitute the said concentrator-selector assembly (20), these means comprising two second grids (23, 24) having ribs (25, 26) on each grid facing the ribs on the other and between which the edges of the concentration and selection plates bearing the ends of their waveguides (g) are mounted, and comprising two side blocks (51, 52) to which the second grids (23, 24) are attached, the strips of photodiodes (31) being lodged in corresponding windows of one (23) of said second grids (23, 24),
- and means (57, 58) for assembling said assemblies to one another with the plates (11) of one of the assemblies (10) being disposed transversely to the plates (21) of the other assembly (20).

3. An optoelectronic switch device according to one of claims 1 and 2, characterized in that each one of the distribution plates (11) comprises a peripheral frame (12) for mechanically mounting it in said distributor assembly (10).

4. An optoelectronic switch device according to one of claims 1 to 3, characterized in that each one of the concentration and selection plates (21) includes a peripheral frame (22) for mechanically mounting it in the said concentrator selector assembly (20).

5. An optoelectronic switch device according to one of claims 1 to 4, characterized in that each one of the distribution plates (11) is formed by a glass plate in which the waveguides (h) incorporated therein are created by ion diffusion.

6. An optoelectronic switch device according to one of claims 1 to 5, characterized in that each one of the concentration and selection plates (21) is formed by a glass plate in which the waveguides (g) incorporated therein are created by ion diffusion, the integrated strip (31) of photodiodes coupled individually to the first ends of its waveguides (g) being applied to the first edge of this plate (21).

7. An optoelectronic switch device according to one of claims 1 to 4, characterized in that each one of the distribution plates (11) is made of silica-charged resin in which individual fibres constituting its own waveguides (h) are embedded.

8. An optoelectronic switch device according to one of claims 1 to 4, characterized in that each one of the distribution plates (11) is made of glass in which individual fibres constituting its waveguides (h) are embedded.

9. An optoelectronic device according to one of claims 1 to 4, 7 and 8, characterized in that each one of the concentration and selection plates (21) is made of silica-charged epoxy resin in which individual fibres constituting its waveguide (g) are embedded, the integrated strip of photodiodes coupled individually to the first end of these guides respectively being applied by gluing to the first edge of this plate (21).

10. An optoelectronic device according to one of claims 1 to 4, 7 and 8, characterized in that each one of the concentration and selection plates (21) is made of glass in which individual fibres constituting its waveguides (g) are embedded, the integrated strip (31) of photodiodes coupled individually to the first ends of its guides respectively being applied by gluing to the first edge of this plate (21).

# FIG.1

# FIG.2

0 131 722

# FIG.3

# FIG.4

# FIG.5